# EUROPÄISCHE PATENTSCHRIFT

(11) **EP 1 903 243 B1**
(45) Veröffentlichungstag und Bekanntmachung des Hinweises auf die Patenterteilung: **01.04.2009**
(21) Anmeldenummer: 07017167.3
(22) Anmeldetag: 01.09.2007
(51) Int. Cl.: F16D 55/227

(54) **Gleitsattel-Scheibenbremse**
Floating caliper disc brake
Frein à disque à étrier coulissant

(30) Priorität: 20.09.2006 DE 102006044835
(43) Veröffentlichungstag der Anmeldung: 26.03.2008
(73) Patentinhaber: BPW Bergische Achsen KG, 51674 Wiehl (DE)
(72) Erfinder: Pehle, Michael, Dipl.-Ing., 51371 Leverkusen (DE); Goyke, Georg, Dipl.-Ing., 51588 Nümbrecht (DE)
(74) Vertreter: Christophersen, Ulrich Rudolf

(56) Entgegenhaltungen:
- EP-A- 1 089 007
- DE-A1-8102004 045 21
- DE-A1-7102004 055 52
- FR-A- 2 441 766
- GB-A- 2 182 990

## Beschreibung

Die Erfindung betrifft eine Gleitsattel-Scheibenbremse nach dem Oberbegriff des Patentanspruchs 1. Die Erfindung betrifft ferner einen Führungszapfen für den Bremssattel einer Gleitsattel-Scheibenbremse nach dem Oberbegriff des Patentanspruchs 7.

Derartige Scheibenbremsen nach dem Gleitsattelprinzip sind aus der FR-A-2 441 766, der DE 20 2005 005 798 U1 und der DE 10 2004 045 218 A1 bekannt. Die Montage der Scheibenbremse erfolgt unter Verwendung eines Bremsträgers, welcher fest mit der jeweiligen Fahrzeugachse verbunden ist. An dem Bremsträger kann bereits ein Belagschacht für einen der beiden Bremsbeläge der Scheibenbremse ausgebildet sein. Mit dem Bremsträger verschraubt sind zylindrische Führungszapfen für die gleitbewegliche Lagerung des Bremssattels der Scheibenbremse. Hierzu ist der Bremssattel bzw. das Bremsgehäuse mit entsprechenden Führungsbuchsen versehen. Für den Praxiseinsatz muss die aus Führungszapfen und Führungsbuchse bestehende Gleitlagerung gegen ein Eindringen von Schmutz und Staub abgedichtet sein, wozu z. B. Dichtungsmanschetten verwendet werden. Sofern, etwa bei Wartungsarbeiten an der Bremse oder im Rahmen eines Austauschs der Bremsbeläge, der Bremssattel in Bezug auf den Bremsträger zu stark verschoben wird, kann es zu einem Abheben oder umgekehrt einer Quetschung der Dichtungen kommen. Aus diesem Grunde ist der in der DE 10 2004 045 218 A1 beschriebene Bremsträger mit Anschlägen versehen, welche die maximale Verschiebung des Bremssattels begrenzen. Die zusätzliche Anformung dieser Anschläge ist herstellungstechnisch aufwendig und verteuert daher die Scheibenbremse.

Ziel der Erfindung ist es daher, eine Wegbegrenzung des Bremssattels mit einfachen, in der Herstellung preiswerten Mitteln zu erreichen.

Zur **Lösung** dieser Aufgabe wird eine Gleitsattel-Scheibenbremse mit den in Patentanspruch 1 angegebenen Merkmalen, und ein Führungszapfen für den Bremssattel einer Gleitsattel-Scheibenbremse mit den in Patentanspruch 7 angegebenen Merkmalen vorgeschlagen.

Die Anordnung des die Längsbewegung des Bremssattels begrenzenden Anschlages an dem bei einer Gleitsattelbremse ohnehin vorhandenen Führungszapfen ermöglicht eine Wegbegrenzung mit einfachen und in der Herstellung preiswerten Mitteln. Da der Führungszapfen ein Drehteil ist, lässt sich dieser ohne nennenswerten Mehraufwand z. B. mit einem Bund versehen, dessen dem Bremsträger zugewandte Stirnfläche dann den Anschlag bildet.

Mit der Erfindung wird ferner vorgeschlagen, dass der Führungszapfen gegen den Bremsträger verschraubt ist, und dass der Bund an dem der Verschraubung abgewandten Ende des Führungszapfens an dem Führungszapfen angeformt ist. Dies führt zu einer fertigungstechnisch einfachen und damit preiswerten Möglichkeit, den die Längsbewegung des Bremssattels begrenzenden Anschlag zu realisieren.

Mit einer weiteren Ausgestaltung wird vorgeschlagen, dass die Bohrung der Führungsbuchse zweistufig ist, wobei eine Schulter zwischen der ersten und der zweiten Stufe einen die Längsbewegung begrenzenden Gegenanschlag bildet.

Schließlich sieht eine Ausgestaltung mindestens eine Lagerbuchse zwischen Führungszapfen und Führungsbuchse vor, wobei sich die Lagerbuchse nur entlang einer der beiden Stufen der zweistufigen Bohrung erstreckt.

Ein Ausführungsbeispiel der Erfindung wird nachfolgend anhand der zugehörigen Zeichnungen erläutert. Darin zeigen:
- Fig. 1: eine perspektivische Darstellung eines Bremsträgers und eines Bremssattels einer Gleitsattel-Scheibenbremse; nicht dargestellt sind die Bremsscheibe sowie die beiderseits der Bremsscheibe in Belagschächten angeordneten Bremspads der Scheibenbremse;
- Fig. 2: die Gegenstände nach Fig. 1 in einer Seitenansicht mit Blickrichtung in Achsrichtung R;
- Fig. 3: eine Seitenansicht des Bremssattels mit dem darin angeordneten Bremsträger;
- Fig. 4a: den in Fig. 3 bezeichneten Bereich IVa in einer vergrößerten Schnittdarstellung und
- Fig. 4b: die Gegenstände nach Fig. 4a im Falle einer anderen Längsposition des Bremssattels.

Die Figuren zeigen eine erfindungsgemäße Scheibenbremse des Gleitsattel-Typs. Sie findet Verwendung vor allem an nicht-angetriebenen Achsen für Schwerlastfahrzeuge, z. B. als Radbremse bei Lkw-Anhängern oder -Aufliegern. Solche Fahrzeuge verfügen als Achse über durchgehende Achsrohre, an deren Enden auf dort angeordneten Achsschenkel die Radnaben mit den Bremsscheiben drehbar gelagert sind. Starr an dem Achsrohr oder Achsschenkel befestigt ist ein Bremsträger 2, an dem sich wiederum eine Lagerung für den schwimmend angeordneten Bremssattel 3 befindet.

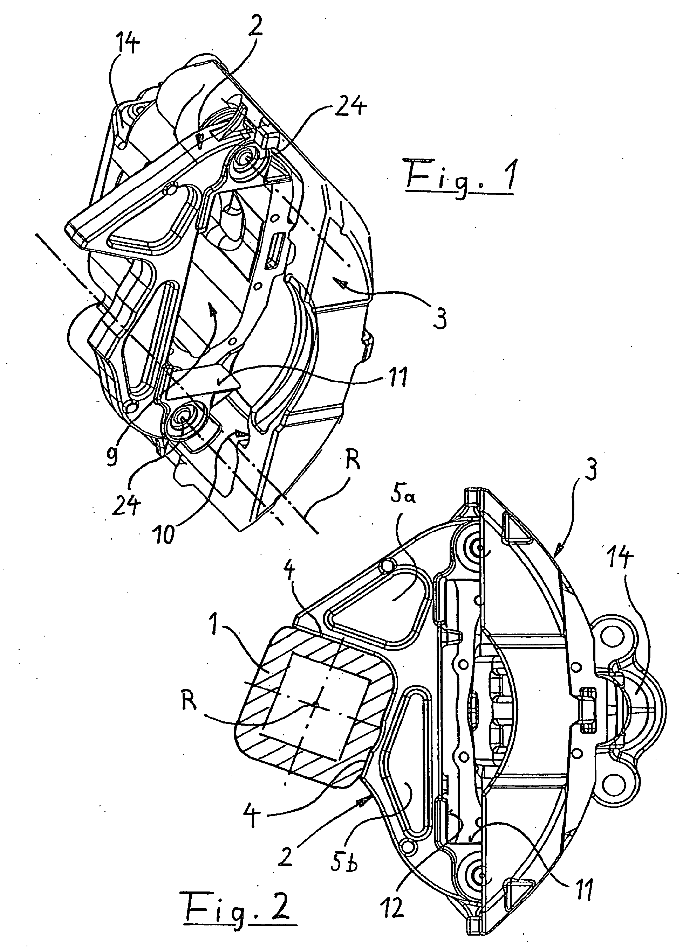

Insbesondere Fig. 2 lässt die Zuordnung dieser Teile mit der hier als Vierkantrohr gestalteten Fahrzeugachse 1, dem daran verschweißten Bremsträger 2 und dem auf dem Bremsträger geführten Bremssattel 3 erkennen. Zur starren Befestigung des Bremsträgers 2 an dem Rohr der Fahrzeugachse 1 erstreckt sich eine Schweißnaht 4 entlang eines ersten, horizontalen Schweißnahtabschnittes sowie eines hierzu rechtwinkligen, zweiten Schweißnahtabschnittes. Dargestellt ist insoweit eine durchgehende Schweißverbindung. Zur Vermeidung von Spannungsspitzen kann es jedoch von Vorteil sein, die Verschweißung abzusetzen, d. h. zwei oder drei getrennte Schweißnähte 4 zu ziehen. Zudem kann der Bremsträger 2 aus zwei getrennten Trägerteilen bestehen, wie dies z. B. in der DE 10 2006 002 569.5 beschrieben ist.

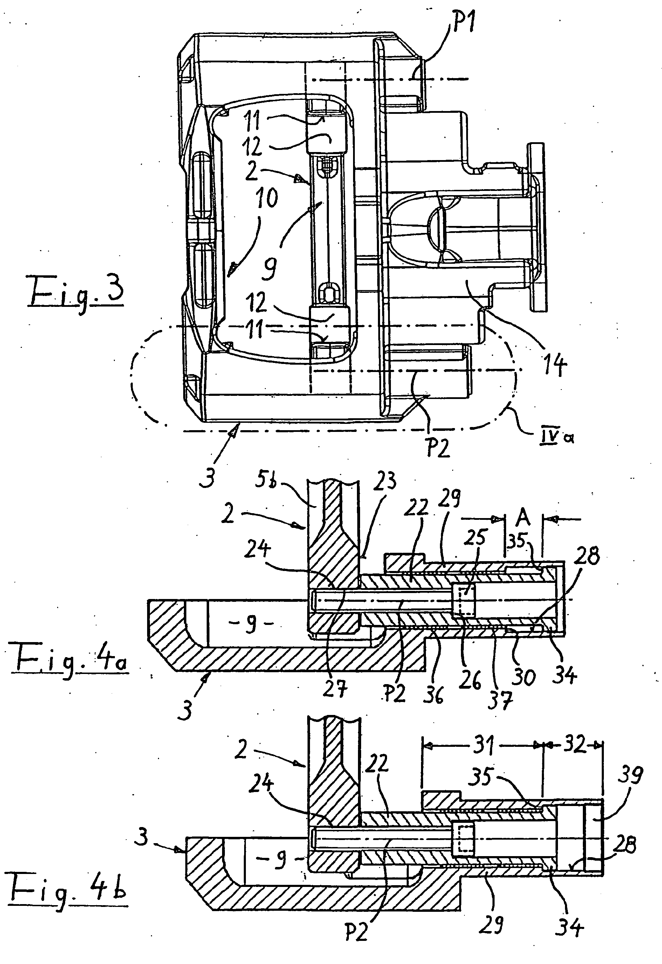

Die Fign. 1 und 3 zeigen die Scheibenbremse ohne die Fahrzeugachse. Der Bremsträger 2 ist als flache Platte aus z. B. Stahlguss gefertigt, wobei sich auf einer oder auf beiden Seiten gewichtsreduzierende Ausnehmungen 5a, 5b oder auch Öffnungen befinden können. Alternativ lässt sich der Bremsträger 2 durch Schmieden oder durch Konturfräsen einer Platte herstellen. Ferner ist es möglich, dem Bremsträger aus mehreren parallel geschichteten und entsprechend dünneren Platten zusammenzusetzen.

Bestandteil des Bremsträgers 2 ist ein Belagschacht 9 für einen Bremsbelag bzw. Bremspad der Scheibenbremse. Bei den hier beschriebenen Ausführungsbeispielen ist der Belagschacht 9 für den inneren der beiden Bremspads einstückig direkt an dem Bremsträger 2 ausgebildet. Ein Bremspad lässt sich daher von außen her und in Richtung auf die Achse 1 in diesen Belagschacht 9 einsetzen. Um den Bremspad beim Bremsen in dem Belagschacht 9 abzustützen und zudem in Achsrichtung R beweglich zu führen, befinden sich an den Innenflächen des Belagschachts 9 entsprechende Aufnahme- bzw. Führungsflächen. Hierzu zählen zunächst radiale Führungsflächen 11, welche parallel zueinander verlaufen, sowie ferner tangentiale Führungsflächen 12, die sich rechtwinklig zu den radialen Führungsflächen 11 erstrecken. Auf den zu beiden Seiten des Belagschachts 9 angeordneten Achsen P1 und P2 befinden sich Aufnahmeelemente für die Befestigung und Führung des die Bremsscheibe der Scheibenbremse übergreifenden Bremssattels 3. Die Befestigung des Bremssattels 3 an dem Bremsträger 2 erfolgt gleitbeweglich parallel zur Achsrichtung R, da die beschriebene Scheibenbremse eine Gleit- oder Schwimmsattelscheibenbremse ist.

Der Bremssattel 3 ist mit einer hydraulischen, pneumatischen oder elektrischen Zuspanneinrichtung 14 zur Zustellung der Bremspads gegen die Bremsscheibe versehen. Der innere der beiden Bremspads ist in dem bereits beschriebenen Belagschacht 9 des Bremsträgers 2 aufgenommen und darin geführt. Der äußere Bremsbelag / Bremspad ist hingegen in einer Aufnahme 10 des Bremssattels 3 aufgenommen und darin gehalten.

Der schwimmenden Lagerung des Bremssattels 3 dienen Aufnahmeelemente, die in Gestalt von Führungszapfen auf den mit P1 , und P2 (Fig. 3) bezeichneten Achsen an dem Bremsträger 2 befestigt sind. Die Anordnung und Ausgestaltung dieser Führungszapfen wird nachfolgend anhand der Fign. 4a und 4b erläutert, wobei diese Darstellungen den in Fig. 3 eingezeichneten Bereich IVa im Schnitt und vergrößert wiedergeben.

Der Führungszapfen 22 (ein ähnlich gestalteter, zweiter Führungszapfen befindet sich auf der Achse P1) ist gegen jene Seite 23 des Bremsträgers 2 verschraubt, die der Bremsscheibe abgewandt ist. Die Verschraubung 24 ist eine Schraube in dem zylindrischen Führungszapfen 22, die sich mit Ihrem Kopf 25 an einem Absatz 26 innen im Führungszapfen 22 abstützt, und die mit ihrem Gewinde in ein entsprechendes Gewinde 27 des Bremsträgers 2 eingreift.

In Fig. 4a und 4b ist dargestellt, wie sich der Führungszapfen 22 mit seiner Stirnfläche unmittelbar gegen die Flachseite 23 des Bremsträgers 2 abstützt. Ebenso ist es möglich, den Bremsträger 2 in diesem Bereich mit einer ebenen Einsenkung zu versehen, an der sich dann die Stirnseite des Führungszapfens 22 fest abstützt.

Das komplementäre Führungselement zu dem Führungszapfen 22 ist eine Führungsbohrung bzw. Führungsbuchse 29. Diese ist, wie die Fign. 4a und 4b erkennen lassen, einstückig zu dem Bremssattel 3. Die Bohrung 28 der Führungsbuchse 29 ist durchgehend, jedoch zweistufig gestaltet. An einer Schulter 30 in Gestalt einer axial ausgerichteten Fläche geht die erste Stufe 31 der Bohrung 28 in deren zweite Stufe 32 über, wobei die zweite Stufe 32 den größeren Bohrungsdurchmesser aufweist.

Ausschließlich im Bereich der ersten Stufe 31 der Bohrung 28 sitzt in dieser eine erste Lagerbuchse 36 und eine zweite Lagerbuchse 37. Die Lagerbuchsen 36, 37 bilden Gleitlager zwischen der Führungsbuchse 29 und der entsprechenden zylindrischen Außenfläche des Führungszapfens 2.

An seinem der Verschraubung abgewandten Ende ist an dem Führungszapfen 22 ein gegenüber der Gleitfläche radial erweiterter Bund 34 angeformt. Bei dem dargestellten Ausführungsbeispiel ist der Bund 34 als kurzer zylindrischer Abschnitt gestaltet, dessen Durchmesser geringfügig geringer ist, als der Durchmesser der Bohrung 28 in der zweiten Stufe 32.

Der Bund 34 des Führungszapfens 22 bildet einen zu der Verschraubung 24 hin gerichteten Anschlag 35, welcher die Längsbewegung des Bremssattels 3 in Bezug auf den Bremsträger 2 begrenzt. Hierzu zeigt Fig. 4a die Verhältnisse für den Fall, dass in dem Belagschacht 9 der Scheibenbremse frische, unverbrauchte Bremspads angeordnet sind. Zwischen dem Bund 34 des Führungszapfens 22 und der Schulter 30 der Führungsbuchse 29 besteht in diesem Fall ein axialer Freiraum A. Dem gegenüber zeigt Fig. 4b die Situation bei Erreichen des maximalen Längsweges des Bremssattels 3 in Bezug auf den Bremsträger 2. Der Bund 34 stößt axial an den Gegenschlag in Gestalt der Schulter 30 an, wodurch jede weitere Längsbewegung des Bremssattels blockiert ist. Insbesondere kann es zu keinem Abreißen oder Lösen der Abdichtung, z. B. einer Dichtungsmanschette zwischen Bremssattel und Bremsträger kommen. Ein Eindringen von Schmutz von der anderen Seite her wird durch einen Stopfen 39 verhindert, welcher in die Bohrung 28 eingesetzt ist.

Alternativ zu der hier beschriebenen Ausführungsform können die Lagerbuchsen 36, 37 auf die beiden Stufen 31 und 32 mit entsprechenden unterschiedlichen Durchmessern verteilt werden. Der Führungszapfen 22 weist dann einen korrespondierenden langen zylindrischen Bund 34 auf, dessen Mantelfläche selbst an der Lagerung teilnimmt.

### Bezugszeichenliste

- 1: Fahrzeugachse
- 2: Bremsträger
- 3: Bremssattel
- 4: Schweißnaht
- 5a: Ausnehmung
- 5b: Ausnehmung
- 9: Belagschacht
- 10: Aufnahme, Belagschacht
- 11: radiale Führungsfläche
- 12: tangentiale Führungsfläche
- 14: Zuspanneinrichtung
- 22: Führungszapfen
- 23: Seite
- 24: Verschraubung
- 25: Kopf
- 26: Absatz
- 27: Gewinde
- 28: Bohrung
- 29: Führungsbuchse
- 30: Schulter
- 31: erste Stufe der Bohrung
- 32: zweite Stufe der Bohrung
- 34: Bund
- 35: Anschlag
- 36: Lagerbuchse
- 37: Lagerbuchse
- 39: Stopfen

- A: axialer Freiraum
- P1: Achse
- P2: Achse
- R: Achsrichtung

## Patentansprüche

1. Gleitsattel-Scheibenbremse mit einem an einer Fahrzeugachse befestigten Bremsträger (2) und einem daran in Achsrichtung (R) beweglich geführten, eine Zuspanneinrichtung (14) aufweisenden Bremssattel (3), wobei sich die Bremssattelführung aus einem Führungszapfen (22), welcher mittels einer Schraube an dem Bremsträger (2) befestigt ist, und einer auf dem Führungszapfen (22) längsbeweglichen Führungsbuchse (29) zusammensetzt, und wobei die Längsbewegung des Bremssattels (3) durch einen Anschlag (35) begrenzt ist,
**dadurch gekennzeichnet,**
**dass** der Führungszapfen (22) innen mit einem Absatz (26) versehen ist, an dem sich die Schraube mit ihrem Kopf (25) abstützt, und dass der Führungszapfen (22) mit einer dem Bremsträger (2) zugewandten, einen Anschlag (35) bildenden Stirnfläche versehen ist.

2. Gleitsattel-Scheibenbremse nach Anspruch 1, **dadurch gekennzeichnet, dass** der Führungszapfen (22) einen Bund (34) aufweist, dessen dem Bremsträger (2) zugewandte Stirnfläche den Anschlag (35) bildet.

3. Gleitsattel-Scheibenbremse nach einem der vorangehenden Ansprüche, **dadurch gekennzeichnet, dass** die Bohrung (28) der Führungsbuchse (29) zweistufig ist, wobei eine Schulter (30) zwischen der ersten Stufe (31) und der zweiten Stufe (32) einen die Längsbewegung begrenzenden Gegenanschlag bildet.

4. Gleitsattel-Scheibenbremse nach Anspruch 3, **gekennzeichnet durch** mindestens eine Lagerbuchse (36, 37) zwischen Führungszapfen (22) und Führungsbuchse (29), wobei sich die Lagerbuchse (36, 37) nur entlang einer der beiden Stufen (31, 32) der zweistufigen Bohrung (28) erstreckt.

5. Gleitsattel-Scheibenbremse nach einem der vorangehenden Ansprüche, **dadurch gekennzeichnet, dass** der außen liegende Bremsbelag der Gleitsattel-Scheibenbremse in dem Bremssattel (3) gehalten ist.

6. Gleitsattel-Scheibenbremse nach einem der vorangehenden Ansprüche, **dadurch gekennzeichnet, dass** der innen liegende Bremsbelag der Gleitsattel-Scheibenbremse in dem Bremsträger gehalten ist.

7. Führungszapfen für den Bremssattel einer Gleitsattel-Scheibenbrems nach einem der vorangehenden Ansprüche, mit einer an dem einen Ende angeordneten Verschraubung (24) zur Befestigung des Führungszapfens (22) an einem Bremsträger,
**gekennzeichnet durch**
- einen angeformten, erweiterten Bund (34) mit einem daran ausgebildeten, zu der Verschraubung (24) hin gerichteten Anschlag (35) und
- einen Absatz (26) innen im Führungszapfen (22), an dem sich ein Kopf (25) der Verschraubung (24) abstützt.

8. Führungszapfen nach Anspruch 7, **dadurch gekennzeichnet, dass** der Bund (34) an dem anderen Ende des Führungszapfens (22) angeordnet ist.

## Claims

1. Sliding caliper disc brake comprising a brake carrier (2) fixed to a vehicle axle and a brake caliper (3) which is guided thereon such that it can move in the axial direction (R) and which has a brake application device (14), wherein the brake caliper guide is composed of a guide journal (22), which is fixed by means of a screw to the brake carrier (2), and a guide bushing (29) which is longitudinally movable on the guide journal (22), and wherein the longitudinal movement of the brake caliper (3) is limited by a stop (35), **characterised in that** the guide journal (22) is provided with a step (26) on the inside, against which the screw is supported by its head (25), and **in that** the guide journal (22) is provided with an end face which faces towards the brake carrier (2) and forms a stop (35).

2. Sliding caliper disc brake according to claim 1, **characterised in that** the guide journal (22) has a collar (34), of which the end face which faces towards the brake carrier (2) forms the stop (35).

3. Sliding caliper disc brake according to one of the preceding claims, **characterised in that** the bore (28) of the guide bushing (29) has two stages, wherein a shoulder (30) between the first stage (31) and the second stage (32) forms a counter-stop which limits the longitudinal movement.

4. Sliding caliper disc brake according to claim 3, **characterised by** at least one bearing bushing (36, 37) between the guide journal (22) and guide bushing (29), wherein the bearing bushing (36, 37) extends only along one of the two stages (31, 32) of the two-stage bore (28).

5. Sliding caliper disc brake according to one of the preceding claims, **characterised in that** the outer brake lining of the sliding caliper disc brake is held in the brake caliper (3).

6. Sliding caliper disc brake according to one of the preceding claims, **characterised in that** the inner brake lining of the sliding caliper disc brake is held in the brake carrier.

7. Guide journal for the brake caliper of a sliding caliper disc brake according to one of the preceding claims, comprising a screw connection (24) arranged at one end for fixing the guide journal (22) to a brake carrier, **characterised by**
- an integral widened collar (34) with a stop (35) formed thereon which is directed towards the screw connection (24), and
- a step (26) on the inside of the guide journal (22), against which a head (25) of the screw connection (24) is supported.

8. Guide journal according to claim 7, **characterised in that** the collar (34) is arranged at the other end of the guide journal (22).

## Revendications

1. Frein à disque à étrier coulissant avec un support de frein (2) fixé à un essieu de véhicule et un étrier de frein (3) guidé mobile sur celui-ci dans la direction axiale (R) et présentant un dispositif de serrage (14), dans lequel le guidage d'étrier de frein est composé d'un tenon de guidage (22), qui est fixé au moyen d'une vis sur le support de frein (2), et d'une douille de guidage (29) mobile longitudinalement sur le tenon de guidage (22), et dans lequel le mouvement longitudinal de l'étrier de frein (3) est limité par une butée,
**caractérisé en ce que**
le tenon de guidage (22) présente à l'intérieur un décrochement (26) sur lequel la vis s'appuie avec sa tête (25) et **en ce que** le tenon de guidage (22) est muni d'une surface frontale tournée vers le support de frein (2) et formant une butée (35).

2. Frein à disque à étrier coulissant selon la revendication 1, **caractérisé en ce que** le tenon de guidage (22) présente une collerette (34) dont la surface frontale tournée vers le support de frein (2) forme la butée (35).

3. Frein à disque à étrier coulissant selon l'une des revendications précédentes, **caractérisé en ce que** le perçage (28) de la douille de guidage (29) est à deux niveaux, un épaulement (30) entre le premier niveau (31) et le deuxième niveau (32) formant une contre-butée limitant le mouvement longitudinal.

4. Frein à disque à étrier coulissant selon la revendication 3, **caractérisé par** au moins une douille de montage (36, 37) entre le tenon de guidage (22) et la douille de guidage (29), la douille de montage (36, 37) ne s'étendant que le long de l'un des deux niveaux (31, 32) du perçage à deux niveaux (28).

5. Frein à disque à étrier coulissant selon l'une des revendications précédentes, **caractérisé en ce que** la garniture de frein du frein à disque à étrier coulissant située à l'extérieur est tenue dans l'étrier de frein (3).

6. Frein à disque à étrier coulissant selon l'une des revendications précédentes, **caractérisé en ce que** la garniture de frein du frein à disque à étrier coulissant située à l'intérieur est tenue dans le support de frein.

7. Tenon de guidage pour l'étrier de frein d'un frein à disque à étrier coulissant selon l'une des revendications précédentes, avec un vissage (24) placé à une extrémité pour la fixation du tenon de guidage (22) sur un support de frein,
**caractérisé par**
- une collerette (34) élargie rapportée avec une butée (35) formée dessus et tournée vers le vissage (24), et
- un décrochement (26) à l'intérieur dans le tenon de guidage (22), contre lequel s'appuie une tête (25) du vissage (24).

8. Tenon de guidage selon la revendication 7, **caractérisé en ce que** la collerette (34) est placée à l'autre extrémité du tenon de guidage (22).
